# FASCICULE DE BREVET EUROPEEN

(11) **EP 3 254 018 B1**
(45) Date de publication et mention de la délivrance du brevet: **01.01.2020**
(21) Numéro de dépôt: 16706984.8
(22) Date de dépôt: 05.02.2016
(51) Int. Cl.: F21S 43/237, F21S 43/245, G02B 6/00

(54) **GUIDE DE LUMIÈRE AVEC MOYENS DE COMPENSATION DES PERTES PROGRESSIVES DE LUMIÈRE LE LONG DU GUIDE**
LICHTLEITER MIT MITTELN ZUR KOMPENSATION SCHRITTWEISER VERLUSTE VON LICHT ENTLANG DES LEITERS
LIGHTGUIDE WITH MEANS TO COMPENSATE FOR GRADUAL LOSSES OF LIGHT ALONG THE GUIDE

(30) Priorité: 05.02.2015 FR 1550920
(43) Date de publication de la demande: 13.12.2017
(73) Titulaire: Valeo Vision, 93012 Bobigny Cedex (FR)
(72) Inventeur: DE LAMBERTERIE, Antoine, 93012 Bobigny Cedex (FR); VALOIS, Christophe, 59178 Hasnon (FR)
(74) Mandataire: Oggioni, Baptiste
(86) Numéro de dépôt international: PCT/EP2016/052560
(87) Numéro de publication internationale: WO 2016/124770

(56) Documents cités:
- EP-A1- 0 935 091
- EP-A1- 1 780 463
- DE-A1- 10 055 561
- FR-A1- 2 871 550
- US-A1- 2011 044 059

## Description

L'invention a trait au domaine des guides de lumière notamment pour module et dispositif d'éclairage et/ou de signalisation pour véhicule automobile.

Le document de brevet FR 2 871 550 A1 divulgue un guide de lumière pour dispositif d'éclairage ou de signalisation pour véhicule automobile, le guide comprenant un corps transparent généralement allongé suivant une direction principale avec une surface extérieure formant avec l'environnement dudit corps un dioptre et des facettes de réflexion réparties le long de sa surface extérieure. Les facettes de réflexion sont de profil prismatique de manière à dévier des rayons lumineux parcourant le guide par réflexion successive sur le dioptre. Cette déviation permet aux rayons en question de rencontrer le dioptre avec un angle d'incidence inférieur à l'angle limite de réflexion totale et ainsi de sortir du corps du guide. Les facettes de réflexion prismatiques présentent un profil variable le long du guide de manière à compenser au moins partiellement la perte de lumière progressive liée essentiellement à leur sortie progressive. Pour ce faire, le profil prismatique peut présenter une hauteur et/ou un espacement variable. Les facettes prismatiques adjacentes peuvent en effet être distantes l'une de l'autre, cette distance pouvant alors diminuer le long du guide depuis la source de lumière. Les facettes prismatiques peuvent présenter une hauteur variable, cette hauteur augmentant le long du guide depuis la source de lumière. La solution de compensation de pertes divulguées dans cet enseignement est intéressante. Elle présente toutefois l'inconvénient qu'elle est susceptible de former une image irrégulière compte tenu de la variation du pas et/ou de la hauteur des facettes prismatiques le long du guide. Par voie de conséquence, la compensation permise par cette solution est limitée si l'on désire limiter l'effet d'irrégularité sur l'image produite.

Le document de brevet EP 1 780 463 A1 divulgue également un guide de lumière pour un dispositif d'éclairage ou de signalisation pour véhicule automobile. Similairement à l'enseignement précédent, le corps transparent du guide comprend des facettes de réflexion destinées à faire sortir des rayons du guide le long de ce dernier. Les facettes de réflexion présentent un profil pseudo-prismatique à savoir qu'elles sont courbes et/ou forment une cassure de manière à présenter des inclinaisons différentes. L'objectif de cette mesure est d'améliorer l'homogénéité du flux lumineux pour des angles de vue s'écartant de l'angle de vue principal, c'est-à-dire des angles de vue s'écartant de l'axe longitudinal du véhicule.

Le document de brevet EP 0 935 091 A1 divulgue également un guide de lumière pour un dispositif d'éclairage ou de signalisation pour véhicule automobile. Similairement aux enseignements précédents, il comprend des facettes de réflexion réparties le long de sa surface extérieure, ces facettes présentant un profil prismatique de manière à dévier des rayons lumineux parcourant le guide par réflexion successive sur le dioptre. Similairement au premier enseignement mentionné ci-avant, il prévoit des mesures pour compenser la perte progressive de lumière le long du guide. Ces mesures consistent essentiellement à faire varier la largeur des facettes prismatiques le long du guide, plus particulièrement à l'augmenter progressivement au fur et à mesure que l'on s'éloigne de la face d'entrée du guide éclairée par une source lumineuse. Ces mesures présentent toutefois l'inconvénient que les portions des facettes prismatiques présentant des largeurs réduites produisent un faisceau très étroit. En d'autres termes, le faisceau présente un inhomogénéité importante pour des angles de vue s'écartant de l'angle de vue principal, c'est-à-dire des angles de vue s'écartant de l'axe longitudinal du véhicule.

L'invention a pour objectif de proposer un guide de lumière palliant au moins un des inconvénients sus mentionnés. Plus particulièrement, l'invention a pour objectif de proposer un guide de lumière apte à produire un faisceau lumineux le plus homogène possible, plus particulièrement encore apte à produire un faisceau lumineux dont l'homogénéité dans la direction du guide ainsi que transversalement au guide est améliorée.

L'invention a pour objet un guide de lumière comprenant: un corps transparent généralement allongé suivant une direction principale avec une surface extérieure formant avec l'environnement dudit corps un dioptre; des moyens de sortie des rayons, s'étendant le long de la surface extérieure du corps et aptes à faire sortir transversalement du corps des rayons lumineux s'y propageant; remarquable en ce que les moyens de sortie des rayons comprennent: une première rangée de moyens disposés consécutivement; et au moins une deuxième rangée de moyens disposés consécutivement, la distance séparant deux moyens consécutifs de la première et/ou de la ou des deuxièmes rangées étant variable le long de ladite ou desdites rangées. Par « moyens disposés consécutivement », on entend que les moyens en question sont disposés de manière consécutive le long de la surface extérieure du guide.

Les moyens de la première et de la ou des deuxièmes rangées sont avantageusement des facettes de réflexion inclinées aptes à réfléchir les rayons en vue de leur sortie. Les facettes de réflexion de la ou des deuxièmes rangées sont de taille inférieure aux facettes de réflexion correspondantes de la première rangée, c'est-à-dire aux facettes adjacentes de la première rangée.

La première rangée et la ou les deuxièmes rangées sont préférentiellement parallèles et côte à côte.

La ou les deuxièmes rangées est/sont adjacente(s) à la première rangée selon une direction transversale.

L'angle d'inclinaison des facettes de réflexion de la première rangée et/ou de la ou des deuxièmes rangées est préférentiellement constant. Il peut toutefois varier le long du corps du guide. Il en va de même pour la taille de ces facettes.

Selon un mode avantageux de l'invention, les moyens de sortie des rayons sont des prismes formés chacun une facette de réflexion et une facette de liaison, les facettes de réflexion et de liaison de chaque prisme étant jointives par une de leurs arêtes. Les primes peuvent présenter un profil en V de façon à ce que l'une des facettes du prisme, en l'occurrence la facette de réflexion, soit apte à réfléchir par réflexion totale transversalement à la direction principale du guide les rayons l'atteignant. Les facettes de réflexion peuvent être planes, convexes ou concaves.

Selon un mode avantageux de l'invention, la première rangée comprend des facettes de liaison entre les facettes inclinées de manière àormer des prismes, et, de manière préférentielle, lesdites facettes de liaison forment avec des perpendiculaires à la direction principale du corps et passant par lesdites facettes, respectivement, un angle inférieur à 30°, plus préférentiellement inférieur à 20°, plus préférentiellement encore inférieur à 10°. Une facette de liaison relie deux facettes inclinées consécutives.

Le profil des facettes de réflexion et des facettes de liaison est tel que ces facettes forment des volumes prismatiques.

Selon un mode avantageux de l'invention, les facettes de liaison sont adjacentes aux facettes de réflexion respectives.

Selon un mode avantageux de l'invention, la distance séparant deux moyens consécutifs de la première rangée est nulle et la distance séparant deux moyens consécutifs de la ou des deuxièmes rangées est variable le long de ladite ou desdites rangées.

Selon un mode avantageux de l'invention, la distance séparant deux moyens consécutifs de la ou des deuxièmes rangées est nulle et la distance séparant deux moyens consécutifs de la première rangée est variable le long de ladite rangée.

Selon un mode avantageux de l'invention, la distance séparant deux moyens consécutifs de la première rangée est variable le long de ladite rangée et la distance séparant deux moyens consécutifs de la ou des deuxièmes rangées est variable le long de ladite ou desdites rangées.

Selon un mode avantageux de l'invention, les facettes de réflexion de la deuxième rangée ou d'au moins une des deuxièmes rangées sont des facettes inclinées dont la longueur l est inférieure à la longueur L des facettes inclinées correspondante de la première rangée, la longueur l étant préférentiellement inférieure à 30% de la longueur L, plus préférentiellement 50%, plus préférentiellement encore 70%.

Selon un mode avantageux de l'invention, les facettes inclinées de la deuxième rangée ou des deuxièmes rangées sont alignées avec les facettes inclinées correspondantes de la première rangée.

Selon un mode avantageux de l'invention, la ou les deuxièmes rangées comprennent une première et une deuxième facette de liaison entre les facettes inclinées, respectivement ; les premières facettes étant généralement parallèles à la direction principale du corps et les deuxièmes facettes formant avec des perpendiculaires à la direction principale du corps et passant par lesdites facettes, respectivement, un angle inférieur à 30°, plus préférentiellement inférieur à 20°, plus préférentiellement encore inférieur à 10°. Les premières sources de liaison correspondant à un écrétage ou troncature de volumes prismatiques formés par des paires de facette inclinée et de deuxième facette de liaison consécutives.

Selon un mode avantageux de l'invention, les deuxièmes facettes de liaison de la ou des deuxièmes rangées sont alignées avec les facettes de liaison de la première rangée, respectivement.

Selon un mode avantageux de l'invention, les deuxième facettes de liaison de la ou des deuxièmes rangées ont une hauteur h inférieure à la hauteur H des facettes de liaison correspondantes de la première rangée, la hauteur h étant préférentiellement inférieure à 30% de la hauteur H, plus préférentiellement 50%, plus préférentiellement encore 70%.

Selon un mode avantageux de l'invention, la largeur de la première rangée et/ou de la ou des deuxièmes rangées varie le long de la direction principale du corps.

Selon un mode avantageux de l'invention, la largeur de la première rangée diminue et la largeur de la ou d'au moins une des deuxièmes rangées augmente le long de la direction principale du corps dans un sens donné.

Selon un mode avantageux de l'invention, la largeur de la première rangée diminue et la largeur de la ou d'au moins une des deuxièmes rangées augmente le long d'une première portion du corps dans un sens donné, et inversement le long d'une deuxième portion toujours dans le même sens, ladite deuxième portion étant préférentiellement adjacente à la première.

Selon un mode avantageux de l'invention, les facettes de réflexion de la ou des deuxièmes rangées sont inférieures à 70%, préférentiellement 50%, plus préférentiellement 30% des facettes de réflexion correspondantes de la première rangée.

Selon un mode avantageux de l'invention, le guide comprend deux deuxièmes rangées, disposées de part et d'autre de la première rangée.

Selon un mode avantageux de l'invention, la largeur cumulée de la première rangée et de la ou des deuxième rangées est essentiellement constante, préférentiellement sur plus de 50%, plus préférentiellement 70%, plus préférentiellement encore 90% de leur longueur.

Selon un mode avantageux de l'invention, les facettes réfléchissantes de la ou des deuxièmes rangées sont des facettes rugueuses diffusantes.

L'invention a également pour objet un module d'éclairage et/ou de signalisation, comprenant un guide de lumière et au moins une source lumineuse, remarquable en ce que le guide de lumière est conforme à l'invention.

Selon un mode avantageux de l'invention, le module comprend au moins une source lumineuse à chacune des extrémités du guide de lumière.

L'invention a également pour objet un dispositif d'éclairage et/ou de signalisation comprenant un boîtier et un module d'éclairage et/ou de signalisation, remarquable en ce que le module est conforme à l'invention.

Les mesures de l'invention sont avantageuses en ce qu'elles permettent de générer un faisceau lumineux homogène le long de la direction principale du guide de lumière et également transversalement, préférentiellement perpendiculairement, à cette direction. Essentiellement, la première rangée peut être configurée pour progressivement compenser les pertes de lumière le long du guide et ainsi assurer une homogénéité le long de la direction principale du guide. La ou les deuxièmes rangées permettent de compléter le faisceau lumineux dans un direction transversale à la direction principale. La ou les deuxièmes rangées peuvent également participer à l'homogénéité selon la direction principale.

D'autres caractéristiques et avantages de la présente invention seront mieux compris à l'aide de la description et des dessins parmi lesquels :
- La figure 1 est une illustration d'un guide de lumière conforme à l'invention ;
- La figure 2 est une vue en coupe selon II-II du guide de la figure 1 ;
- La figure 3 est vue de détail des rangées de facettes de réflexion du guide de lumière des figures 1 et 2 ;
- La figure 4 est une vue en élévation du guide de lumière des figures 1 à 3, illustrant de manière schématique les rangées de facettes de réflexion ;
- La figure 5 est une vue en coupe du guide des figures 1 à 4, illustrant l'impact des différentes rangées de facettes de réflexion sur le faisceau lumineux produit ;
- La figure 6 est une vue en élévation d'un guide de lumière selon un deuxième mode de réalisation, illustrant de manière schématique les rangées de facettes de réflexion.

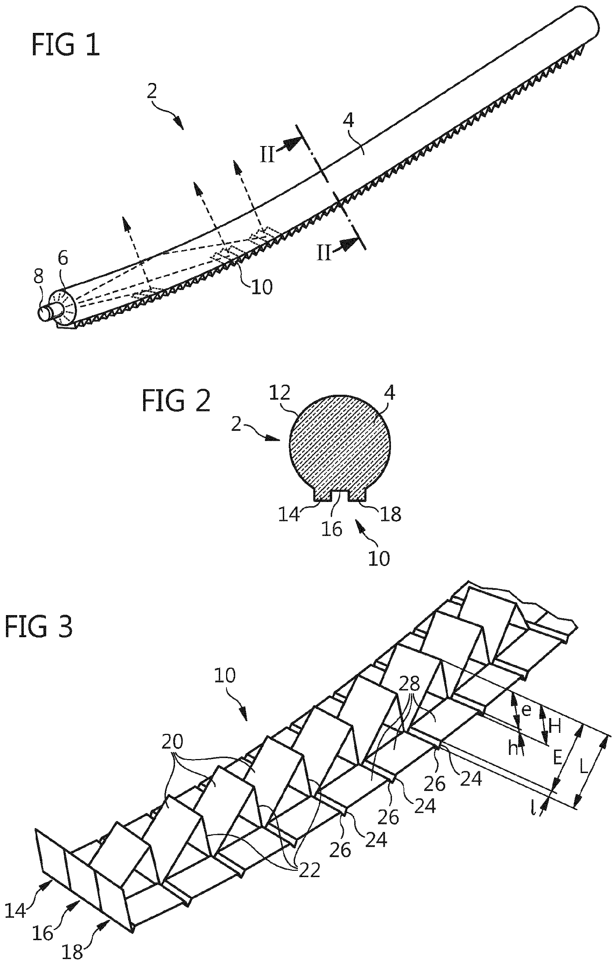

La figure 1 illustre un guide lumière conforme à l'invention. Le guide de lumière 2 comprend un corps transparent 4 s'étendant suivant une direction principale. Il peut s'étendre de manière rectiligne, courbe ou encore une combinaison des deux. Sa section peut prendre diverses formes, comme par exemple une forme circulaire, ovale ou encore polygonale. Le corps transparent 4 peut être en verre ou en matériau plastique tel que notamment du polycarbonate ou du plexiglas. Il comprend une face d'entrée 6 à une de ses deux extrémités, en face de laquelle est disposée une ou plusieurs sources lumineuses 8. Les rayons lumineux émis par la ou les sources lumineuses 8 pénètrent la matière transparente 4 du guide lumière pour s'y propager par transmission et réflexions successives sur le dioptre formé par la surface extérieure du corps et l'air ambiant. En effet, le corps en matière transparente présente un indice de réfraction supérieur à celui de l'air ambiant, typiquement de l'ordre de 1.5 alors que celui de l'air est de 1. Les rayons lumineux tels que ceux représentés par des traits interrompus à la figure 1 rencontrent le dioptre avec des angles d'incidence supérieur à l'angle maximum de réfraction (connu selon la loi de Snell-Descartes). Ces rayons sont alors réfléchis successivement et se propagent dans le corps 4 essentiellement suivant sa direction principale.

Le corps transparent 4 comprend des facettes réfléchissantes inclinées 10 sur une portion de sa surface extérieure. Cette portion peut correspondre à une fraction de la périphérie du corps, comme par exemple moins d'un quart, ou encore moins d'un cinquième de la périphérie. Elle peut s'étendre sur la totalité ou la majeure partie de la longueur du corps ou, alternativement, sur une partie réduite seulement du corps, en fonction notamment de l'application envisagée. Ces facettes réfléchissantes 10 permettent de dévier les rayons suivant des directions transversales à l'axe principal du guide et, partant, de les faire sortir du guide, générant ainsi un faisceau lumineux. Les rayons formant le faisceau lumineux sortent du corps du guide au travers d'une portion du corps essentiellement opposée à la portion comprenant les facettes réfléchissantes 10. Cette portion est habituellement désignée face de sortie, la portion comportant les facettes de réflexion étant habituellement désignée face de réflexion.

La figure 2 illustre avec davantage de détail les facettes de réflexion 10 destinées à faire sortir les rayons lumineux du corps du guide. Il s'agit d'une vue en coupe II-II du guide de la figure 1. On peut y identifier la surface extérieure 12 du corps 4 du guide 2 formant le dioptre. On peut également observer que la portion de facettes réfléchissantes 10 comprend trois zones : une première zone centrale 16 et deux zones latérales 14 et 18, de part et d'autre de la zone centrale. La zone centrale 16 constitue une première rangée de facettes réfléchissantes inclinées et les zones latérales 14 et 18 constituent des deuxièmes rangées de facettes réfléchissantes de taille inférieure à celles de la première rangée, comme cela va être détaillé ci-après en relation avec la figure 3.

La figure 3 est une vue agrandie des facettes réfléchissantes 10 du guide des figures 1 et 2. Il s'agit d'une vue par transparence au travers du corps du guide, la matière du corps étant présente au-dessus du relief illustré et l'air ambiant étant présent au-dessous dudit relief.

La rangée centrale 16 correspond à une première rangée de facettes réfléchissantes au profil prismatique. Plus précisément, la première rangée 16 comprend des facettes de réflexion inclinées 20 et des facettes de liaison 22, une facette de liaison reliant deux facettes inclinées voisines. Chaque paire de facettes inclinée 20 et de liaison 22 adjacentes forme un volume prismatique. Les facettes inclinées 20 peuvent toutes présenter essentiellement le même angle d'inclinaison. Les facettes de liaison 22 sont proches de la perpendiculaire à la direction principale du corps. Elles forment avec des perpendiculaires à la direction principale du corps et passant par lesdites facettes, respectivement, un angle inférieur à 30°, plus préférentiellement inférieur à 20°, plus préférentiellement encore inférieur à 10°.

Les rayons se propageant au travers de la matière du corps du guide et rencontrant une des facettes inclinées 20 peuvent alors être réfléchis transversalement vers la face de sortie du corps, opposée à la face avec les facettes de réflexion 10.

Les rangées latérales 14 et 18 correspondent à des deuxièmes rangées de facettes réfléchissantes. Il s'agit ici également de facettes inclinées 24, similairement aux facettes inclinées 20 de la première rangée. Ces facettes inclinées 24 sont toutefois de taille sensiblement inférieure à celles de la première rangée 16. Elles peuvent être dans l'alignement des facettes inclinées de la première rangée, comme cela est visible à la figure 3. Les deuxièmes rangées comprennent également des facettes de liaison entre les facettes inclinées 24. Elles comprennent des premières facettes de liaison 28 s'étendant essentiellement dans la direction principale du guide, et des deuxièmes facettes de liaison 26 s'étendant dans une direction proche de la perpendiculaire à la direction principale du guide, similairement aux facettes de liaison 22 de la première rangée 16. Similairement aux facettes inclinées des première et deuxièmes rangées, les deuxièmes facettes de liaison 26 de la ou des deuxièmes rangées peuvent être alignées avec les facettes de liaison 22 de la première rangée. Chaque paire de facettes inclinées 24 est reliée par une première facette de liaison 28 et une deuxième facette de liaison 26. En d'autres termes, la première facette de liaison 28 correspond à la troncature du prisme formé par une facette inclinée 24 et une deuxième facette de liaison 26 reliée à la facette inclinée par la première facette de liaison 28. La ou les deuxièmes rangées comprennent par conséquent des facettes inclinées correspondant à des prismes dont le sommet est tronqué.

Similairement aux phénomènes de réflexion sur les facettes inclinées de la première rangée, les rayons se propageant au travers de la matière du corps du guide et rencontrant une des facettes inclinées 24 peuvent alors être réfléchis transversalement vers la face de sortie du corps, opposée à la face avec les facettes de réflexion 10.

Les facettes inclinées 20 de la première rangée 16 présentent une longueur L supérieure à la longueur l des facettes inclinées de la ou des deuxièmes rangées 14 et 18. Les longueurs L et l des facettes inclinées correspondent à la mesure des facettes inclinées selon une direction dans un plan comprenant la direction principale. La longueur l peut être inférieure à 30%, préférentiellement 50%, plus préférentiellement 70% de la longueur L.

Les facettes de liaison 22 de la première rangée 16 présentent une hauteur H supérieure à la hauteur h des deuxièmes facettes de liaison 26 de la ou des deuxièmes rangées 14 et 18. Les hauteurs H et h des facettes de liaison correspondent à la mesure des facettes de liaison selon une direction dans un plan comprenant la direction principale. La hauteur h peut être inférieure à 30% de la hauteur H, préférentiellement 50%, plus préférentiellement 70%.

Les premières facettes de liaison 28 de la ou des deuxièmes rangées 14 et 18 sont d'autant plus longues que les facettes inclinées et les deuxièmes facettes de liaison de la ou des deuxièmes rangées sont inférieures à celles de la première rangée 16. En pratique l'agencement des facettes de réflexion 10 telle que détaillée à la figure 3 a pour effet que les facettes inclinées 24 des deuxièmes rangées 14 et 18 réfléchissent moins de flux lumineux que celles de la première rangées 16. Elles permettent cependant de compléter le faisceau lumineux, notamment dans des zones s'écartant de sa direction principale.

La largeur de la première rangée 16 peut évoluer le long du guide, en particulier augmenter au fur et à mesure que l'on s'éloigne de la face d'entrée et de la ou des sources lumineuses. Dans ce cas, les facettes inclinées réfléchissantes 20 voient leur largeur et donc leur surface progressivement augmenter. Cela permet de compenser la diminution progressive du flux lumineux se propageant le long du guide, liée à la sortie d'une partie des rayons en vue de former le faisceau. La largeur de la ou des deuxièmes rangées peut également varier le long du guide. Elle peut évoluer en sens inverse de celle de la première rangée, c'est-à-dire qu'elle peut diminuer au fur et à mesure que la largeur de la première rangée augmente. En effet, l'augmentation de largeur de la première rangée permet de générer un faisceau dont l'homogénéité dans une direction perpendiculaire à la direction principale du guide devient meilleure, c'est-à-dire suivant des directions d'observation s'écartant de la direction principale du faisceau. Le besoin de compléter le faisceau avec la ou les deuxièmes rangées devient alors moins important. Alternativement, la largeur de la ou des deuxièmes rangées peut rester constante alors que la largeur de la première rangée varie.

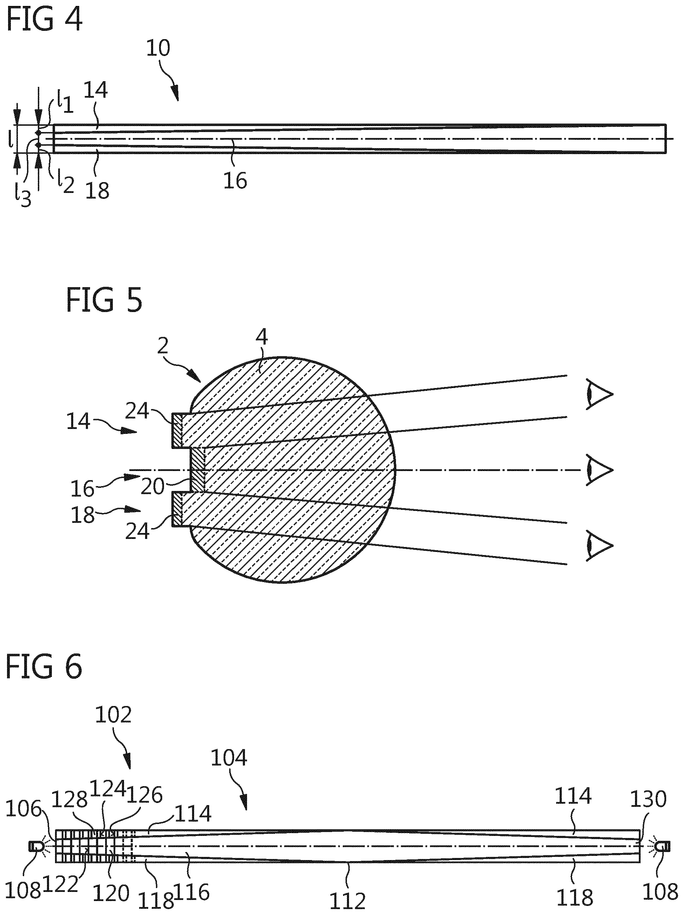

La figure 4 est une vue en élévation de la face de facettes de réflexion 10 du guide des figures 1 à 3, illustrant de manière schématique l'évolution des largeurs respectives des première et deuxième(s) rangées 16 et 14/18, respectivement. L'extrémité de gauche correspond à la face d'entrée 6 (figure 1) du guide et de la ou des sources lumineuses. On peut observer que la première rangée 16 présente une largeur l₃, et que les deuxièmes rangées présentent respectivement des largeurs l₁ et l₂. La largeur l₃ de la première rangée 16 augmente progressivement depuis l'extrémité gauche correspondant à l'entrée de lumière jusqu'à l'extrémité opposée. Les largeurs l₁ et l₂ des deuxièmes rangées 14 et 18 peuvent être égales et diminuent respectivement au prorata de l'augmentation de la largeur l₁ de la première rangée 16, la largeur l cumulée restant essentiellement constante. Cette disposition permet ainsi de compenser la sortie progressive de rayons par l'augmentation de la taille des facettes de réflexion prismatiques de la première rangée. Le complément du faisceau lumineux par les deuxièmes rangées peut alors progressivement être réduit compte tenu de cette augmentation de la taille des facettes de réflexion prismatiques de la première rangée.

La figure 5 est une vue en coupe transversale du corps 4 du guide de lumière 2 des figures 1 à 4. Elle illustre la production du faisceau lumineux par les première et deuxième(s) rangées 16 et 14/18, respectivement. On peut en effet observer que les facettes réféchissantes inclinées 20 de la première rangée 16 génèrent essentiellement la partie centrale du faisceau lumineux, centrée sur l'axe optique du dispositif d'éclairage. On peut également observer que les facettes réfléchissantes inclinées 24 des deuxièmes rangées 14 et 18, ces facettes étant de plus petite taille, viennent compléter le faisceau notamment dans des zones latérales à l'axe optique.

La première rangée 16 permet ainsi de générer la partie centrale du faisceau de manière homogène le long du guide en compensant par la variation de taille des facettes inclinées la perte progressive de flux lumineux le long du guide. La ou les deuxièmes rangées permettent de compléter le faisceau, en particulier dans des zones à distance de l'axe optique du guide de lumière et de son module et dispositif associé. Ceci est particulièrement vrai pour les portions du guide où la taille des facettes de réflexion de la première rangée sont les plus petites, plus particulièrement où elles sont les plus étroites.

Il est à noter qu'en fonction de l'application considérée, une seule deuxième rangée peut être suffisante. La présence de deux deuxièmes rangées, voire davantage, de part et d'autre de la première rangée, permet de compléter le faisceau sur deux côtés opposés.

Il est également à noter que la ou les deuxièmes rangées peuvent être des facettes rugueuses diffusantes. Elles peuvent alors comprendre un grande nombre de petites facettes réfléchissantes orientées de manière aléatoire dans des directions majoritairement normales à la facette rugueuse. La lumière parcourant le guide et rencontrant cette ou ces facettes rugueuses est réfléchie dans un grand nombre de directions dont la normale à la portion de facette rugueuse correspondante est la composante principale, et l'énergie du rayon incident est redistribuée dans une multitude de rayons réfléchis. Il s'agit d'une réflexion diffuse apte à venir compléter le faisceau lumineux produit par la première rangée. La taille moyenne des petites facettes réfléchissantes d'une rangée rugueuse peut être inférieure à 1mm, préférentiellement 0.5mm, plus préférentiellement 0.2mm.

La figure 6 est une vue en élévation de la face des facettes de réflexion d'un guide de lumière selon une variante du guide des figures 1 à 5. Les numéros de référence du guide des figures 1 à 5 sont utilisés ici pour les éléments identiques ou correspondants, ces numéros étant toutefois majorés de 100 afin de bien distinguer les deux modes de réalisation. La figure 6 illustre de manière schématique l'évolution des largeurs respectives des première et deuxième(s) rangées 116 et 114/118, respectivement, du guide 102, toutes autres choses pouvant être égales à celles du guide des figures 1 à 5. On peut observer que le corps 104 du guide 102 comprend deux faces d'entrée 106 et 130, à ses deux extrémités. La première rangée 116 de facettes réfléchisssantes présente une largeur réduite au niveau de chacune des deux faces d'entrée, cette largeur augmentant progressivement depuis les faces d'entrée vers une portion centrale du guide. Les deuxièmes rangées 114 et 118 de part et d'autre de la première rangée 116 voient leurs largeur évoluer en sens inverse, préférentiellement de manière à présenter une largeur totale essentiellement constante.

D'autres modes de réalisation sont envisageables, notamment en ce qui concerne les variations de taille des facettes réfléchissantes des première et deuxième(s) rangées.

## Revendications

1. Guide de lumière (2 ; 102) comprenant :
- un corps transparent (4 ; 104) généralement allongé suivant une direction principale avec une surface extérieure (12; 112) formant avec l'environnement dudit corps un dioptre ;
- des moyens de sortie de rayons s'étendant le long de la surface extérieuredu corps, aptes à faire sortir transversalement du corps des rayons lumineux s'y propageant ;
les moyens de sortie des rayons comprenant :
- une première rangée (16 ; 116) de moyens disposés consécutivement ; et
- au moins une deuxième rangée (14, 18 ; 114, 118) de moyens disposés consécutivement, la distance séparant deux moyens consécutifs de la premiere et/ou de la ou des deuxièmes rangées étant variable le long de ladite ou desdites rangées, les moyens de la première et de la ou des deuxièmes rangées étant des facettes de réflexion inclinées aptes à réfléchir les rayons en vue de leur sortie,
**caractérisé en ce que** les facettes de réflexion de la ou des deuxièmes rangées sont de taille inférieure aux facettes de réflexion correspondantes de la première rangée.

2. Guide de lumière (2 ; 102) selon la revendication 1, **caractérisé en ce que** les moyens de sortie des rayons (14, 16, 18 ; 114, 116, 118) sont des prismes formés chacun une facette de réflexion (20, 24 ; 120, 124) et une facette de liaison (22, 26, 28 ; 122, 126, 128), les facettes de réflexion et de liaison de chaque prisme étant jointives par une de leurs arêtes.

3. Guide de lumière (2 ; 102) selon la revendication 2, **caractérisé en ce que** les facettes de liaison (22 ; 122) de la première rangée forment avec des perpendiculaires à la direction principale du corps et passant par lesdites facettes, respectivement, un angle inférieur à 30°, plus préférentiellement inférieur à 20°, plus préférentiellement encore inférieur à 10°.

4. Guide de lumière (2 ; 102) selon l'une des revendications 1 à 3, **caractérisé en ce que** la distance séparant deux moyens consécutifs de la première rangée est nulle et la distance séparant deux moyens consécutifs de la ou des deuxièmes rangées est variable le long de ladite ou desdites rangées.

5. Guide de lumière selon l'une des revendications 1 à 3, **caractérisé en ce que** la distance séparant deux moyens consécutifs de la ou des deuxièmes rangées est nulle et la distance séparant deux moyens consécutifs de la première rangée est variable le long de ladite rangée.

6. Guide de lumière selon l'une des revendications 1 à 3, **caractérisé en ce que** la distance séparant deux moyens consécutifs de la première rangée est variable le long de ladite rangée et la distance séparant deux moyens consécutifs de la ou des deuxièmes rangées est variable le long de ladite ou desdites rangées.

7. Guide de lumière (2 ; 102) selon l'une des revendications 2 à 6, **caractérisé en ce que** les facettes de réflexion (24 ; 124) de la deuxième rangée ou d'au moins une des deuxièmes rangées (14, 18 ; 114, 118) sont des facettes inclinées dont la longueur l est inférieure à la longueur L des facettes inclinées correspondantes (20 ; 120) de la première rangée (16 ; 116), la longueur l étant préférentiellement inférieure à 30% de la longueur L, plus préférentiellement 50%, plus préférentiellement encore 70%.

8. Guide de lumière (2 ; 102) selon la revendication 7, **caractérisé en ce que** les facettes inclinées (24 ; 124) de la deuxième rangée ou des deuxièmes rangées (14, 18 ; 114, 118) sont alignées avec les facettes inclinées correspondantes (20 ; 120) de la première rangée (16, 116).

9. Guide de lumière (2 ; 102) selon l'une des revendications 7 et 8, **caractérisé en ce que** la ou les deuxièmes rangées (14, 18 ; 114, 118) comprennent une première et une deuxième facette de liaison (28, 26 ; 128, 126) entre les facettes inclinées (24 ; 124), respectivement ; les premières facettes (28 ; 128) étant généralement parallèles à la direction principale du corps et les deuxièmes facettes (26 ; 126) formant avec des perpendiculaires à la direction principale du corps et passant par lesdites facettes, respectivement, un angle inférieur à 30°, plus préférentiellement inférieur à 20°, plus préférentiellement encore inférieur à 10°.

10. Guide de lumière (2 ; 102) selon les revendications 3 et 9, **caractérisé en ce que** les deuxièmes facettes de liaison (26 ; 126) de la ou des deuxièmes rangées (14, 18 ; 114, 118) sont alignées avec les facettes de liaison (22 ; 122) de la première rangée (16 ; 116), respectivement.

11. Guide de lumière (2 ; 102) selon les revendications 3 et 9 ou la revendication 10, **caractérisé en ce que** les deuxièmes facettes de liaison (26 ; 126) de la ou des deuxièmes rangées (14, 18 ; 114, 118) ont une hauteur h inférieure à la hauteur H des facettes de liaison correspondantes (22 ; 122) de la première rangée (16 ; 116), la hauteur h étant préférentiellement inférieure à 30% de la hauteur H, plus préférentiellement 50%, plus préférentiellement encore 70%.

12. Guide de lumière (2 ; 102) selon l'une des revendications 1 à 11, **caractérisé en ce que** la largeur de la première rangée (16, 116) et/ou de la ou des deuxièmes rangées (14, 18 ; 114, 118) varie le long de la direction principale du corps (4 ; 104).

13. Guide de lumière (2 ; 102) selon l'une des revendications 1 à 12, **caractérisé en ce que** la largeur de la première rangée (16 ; 116) diminue et la largeur de la ou d'au moins une des deuxièmes rangées (14, 18, 114, 118) augmente le long de la direction principale du corps (4 ; 104) dans un sens donné.

14. Guide de lumière (102) selon l'une des revendications 1 à 13, **caractérisé en ce que** la largeur de la première rangée (116) diminue et la largeur de la ou d'au moins une des deuxièmes rangées (114, 118) augmente le long d'une première portion du corps (104) dans un sens donné, et inversement le long d'une deuxième portion toujours dans le même sens, ladite deuxième portion étant préférentiellement adjacente à la première.

15. Module d'éclairage et/ou de signalisation, comprenant un guide de lumière et au moins une source lumineuse, **caractérisé en ce que** le guide de lumière (2, 102) est conforme à l'une des revendications 1 à 14.

16. Module selon la revendication 15, **caractérisé en ce qu'**il comprend au moins une source lumineuse (8 ; 108) à chacune des extrémités du guide de lumière.

17. Dispositif d'éclairage et/ou de signalisation comprenant un boîtier et un module d'éclairage et/ou de signalisation, **caractérisé en ce que** le module est conforme à l'une des revendications 15 et 16.

## Patentansprüche

1. Lichtleiter (2; 102), umfassend:
- einen transparenten Körper (4; 104), der im Allgemeinen in einer Hauptrichtung verlängert ist, wobei eine Außenfläche (12; 112) mit der Umgebung des Körpers ein Diopter bildet;
- Strahlaustrittsmittel, die sich entlang der Außenfläche des Körpers erstrecken und in der Lage sind, den Körper der sich dort ausbreitenden Lichtstrahlen quer zu verlassen;
wobei die - Strahlaustrittsmittel umfassen:
- eine erste Reihe (16; 116) von Mitteln, die nacheinander angeordnet sind; und
- mindestens eine zweite Reihe (14, 18; 114, 118) von hintereinander angeordneten Mitteln, wobei der Abstand zwischen zwei aufeinanderfolgenden Mitteln der ersten und/oder zweiten Reihe(n) variabel entlang der Reihe(n) ist, wobei die Mittel der ersten und zweiten Reihe(n) geneigte Reflexionsflächen sind, die in der Lage sind, die Strahlen im Hinblick auf ihren Ausgang zu reflektieren, **dadurch gekennzeichnet, dass** die Reflexionsfacetten der zweiten Reihe(n) kleiner sind als die entsprechenden Reflexionsfacetten der ersten Reihe.

2. Lichtleiter (2; 102) nach Anspruch 1, **dadurch gekennzeichnet, dass** die Strahlaustrittsmittel (14, 16, 18; 114, 116, 118) Prismen sind, die jeweils durch eine Reflexionsfacette (20, 24; 120, 124) und eine Bindungsfacette (22, 26, 28; 122, 126, 128) gebildet sind, wobei die Reflexions- und Bindungsfacetten jedes Prismas durch eine ihrer Kanten verbunden sind.

3. Lichtleiter (2; 102) nach Anspruch 2, **dadurch gekennzeichnet, dass** die Verbindungsfacetten (22; 122) der ersten Reihe mit Senkrechten zur Hauptrichtung des Körpers bilden und durch diese Facetten jeweils einen Winkel von weniger als 30°, vorzugsweise weniger als 20°, vorzugsweise sogar weniger als 10° durchlaufen.

4. Lichtleiter (2; 102) nach einem der Ansprüche 1 bis 3, **dadurch gekennzeichnet, dass** der Abstand zwischen zwei aufeinanderfolgenden Mitteln der ersten Reihe Null ist und der Abstand zwischen zwei aufeinanderfolgenden Mitteln der zweiten Reihe oder den zweiten Reihen entlang der Reihe oder den zweiten Reihen variabel ist.

5. Lichtleiter nach einem der Ansprüche 1 bis 3, **dadurch gekennzeichnet, dass** der Abstand zwischen zwei aufeinanderfolgenden Mitteln der oder den zweiten Reihen Null ist und der Abstand zwischen zwei aufeinanderfolgenden Mitteln der ersten Reihe entlang der Reihe variabel ist.

6. Lichtleiter nach einem der Ansprüche 1 bis 3, **dadurch gekennzeichnet, dass** der Abstand, der zwei aufeinanderfolgende Mittel von der ersten Reihe trennt, entlang der Reihe variabel ist und der Abstand, der zwei aufeinanderfolgende Mittel von der oder den zweiten Reihen trennt, entlang der Reihe oder den Reihen variabel ist.

7. Lichtleiter (2; 102) nach einem der Ansprüche 2 bis 6, **dadurch gekennzeichnet, dass** die Reflexionsfacetten (24; 124) der zweiten Reihe oder mindestens einer der zweiten Reihen (14, 18; 114, 118) geneigte Facetten sind, deren Länge l kleiner ist als die Länge L der entsprechenden geneigten Facetten (20; 120) der ersten Reihe (16; 116), wobei die Länge l vorzugsweise kleiner ist als 30% der Länge L, stärker bevorzugt 50%, stärker bevorzugt sogar 70%.

8. Lichtleiter (2; 102) nach Anspruch 7, **dadurch gekennzeichnet, dass** die geneigten Facetten (24; 124) der zweiten Reihe(n) (14, 18; 114, 118) mit den entsprechenden geneigten Facetten (20; 120) der ersten Reihe (16, 116) ausgerichtet sind.

9. Lichtleiter (2; 102) nach einem der Ansprüche 7 und 8, **dadurch gekennzeichnet, dass** die zweite(n) Reihe(n) (14, 18; 114, 118) eine erste und eine zweite Verbindungsfacette (28, 26; 128, 126) zwischen den geneigten Facetten (24; 124) umfasst; die ersten Facetten (28); 128) im Allgemeinen parallel zur Hauptrichtung des Körpers ist und die zweiten Facetten (26; 126) mit Senkrechten zur Hauptrichtung des Körpers bilden und durch die Facetten jeweils einen Winkel von weniger als 30°, vorzugsweise weniger als 20°, vorzugsweise sogar weniger als 10° durchlaufen.

10. Lichtleiter (2; 102) nach den Ansprüchen 3 und 9, **dadurch gekennzeichnet, dass** die zweiten Verbindungsfacetten (26; 126) der zweiten Reihe oder der zweiten Reihen (14, 18; 114, 118) mit den Verbindungsfacetten (22; 122) der ersten Reihe (16; 116) ausgerichtet sind.

11. Lichtleiter (2; 102) nach den Ansprüchen 3 und 9 oder Anspruch 10, **dadurch gekennzeichnet, dass** die zweiten Verbindungsfacetten (26; 126) der zweiten Reihe oder der zweiten Reihen (14, 18; 114, 118) eine Höhe h aufweisen, die niedriger ist als die Höhe H der entsprechenden Verbindungsfacetten (22; 122) der ersten Reihe (16; 116), wobei die Höhe h vorzugsweise niedriger ist als 30% der Höhe H, vorzugsweise 50%, vorzugsweise sogar 70%.

12. Lichtleiter (2; 102) nach einem der Ansprüche 1 bis 11, **dadurch gekennzeichnet, dass** die Breite der ersten Reihe (16, 116) und/oder der zweiten Reihe(n) (14, 18; 114, 118) entlang der Hauptrichtung des Körpers (4; 104) variiert.

13. Lichtleiter (2; 102) nach einem der Ansprüche 1 bis 12, **dadurch gekennzeichnet, dass** die Breite der ersten Reihe (16; 116) abnimmt und die Breite der oder mindestens einer der zweiten Reihen (14, 18, 114, 114, 114, 118) entlang der Hauptrichtung des Körpers (4; 104) in einer gegebenen Richtung zunimmt.

14. Lichtleiter (102) nach einem der Ansprüche 1 bis 13, **dadurch gekennzeichnet, dass** die Breite der ersten Reihe (116) abnimmt und die Breite der oder mindestens einer der zweiten Reihen (114, 118) entlang eines ersten Abschnitts des Körpers (104) in einer gegebenen Richtung und umgekehrt entlang eines zweiten Abschnitts, der immer in der gleichen Richtung verläuft, zunimmt, wobei der zweite Abschnitt vorzugsweise an die erste angrenzt.

15. Beleuchtungs- und/oder Signalisierungsmodul, umfassend einen Lichtleiter und mindestens eine Lichtquelle, **dadurch gekennzeichnet, dass** der Lichtleiter (2, 102) einem der Ansprüche 1 bis 14 entspricht.

16. Modul nach Anspruch 15, **dadurch gekennzeichnet, dass** es mindestens eine Lichtquelle (8; 108) an jedem Ende des Lichtleiters umfasst.

17. Beleuchtungs- und/oder Signalvorrichtung mit einem Gehäuse und einem Beleuchtungs- und/oder Signalisierungsmodul, **dadurch gekennzeichnet, dass** das Modul einem der Ansprüche 15 und 16 entspricht.

## Claims

1. Light guide (2; 102) comprising:
- a transparent body (4; 104) generally elongated in a main direction with an outer surface (12; 112) forming with the environment of said body a dioptre ;
- beam exit means extending along the outer surface of the body, capable of transversely exiting the body of the light rays propagating there;
the beam exit means comprising:
- a first row (16; 116) of means arranged consecutively; and
- at least one second row (14, 18; 114, 118) of consecutively arranged means, the distance separating two consecutive means from the first and/or second row or rows being variable along said row or rows, the means of the first and second row or rows being inclined reflection facets capable of reflecting the rays with a view to their exit, **characterized in that** the reflection facets of the second row or rows are smaller than the corresponding reflection facets of the first row.

2. Light guide (2; 102) according to claim 1, **characterized in that** the beam exit means (14, 16, 18; 114, 116, 118) are prisms each formed by a reflection facet (20, 24; 120, 124) and a binding facet (22, 26, 28; 122, 126, 128), the reflection and binding facets of each prism being joined by one of their edges.

3. Light guide (2; 102) according to claim 2, **characterized in that** the connecting facets (22; 122) of the first row form with perpendiculars to the main direction of the body and passing through said facets, respectively, an angle of less than 30°, more preferably less than 20°, more preferably even less than 10°.

4. A light guide (2; 102) according to one of claims 1 to 3, **characterized in that** the distance separating two consecutive means from the first row is zero and the distance separating two consecutive means from the second row or rows is variable along said row or rows.

5. A light guide according to one of claims 1 to 3, **characterized in that** the distance separating two consecutive means from the second row or rows is zero and the distance separating two consecutive means from the first row is variable along said row.

6. A light guide according to one of claims 1 to 3, **characterized in that** the distance separating two consecutive means from the first row is variable along said row and the distance separating two consecutive means from the second row or rows is variable along said row or rows.

7. Light guide (2; 102) according to one of claims 2 to 6, **characterized in that** the reflection facets (24; 124) of the second row or at least one of the second rows (14, 18; 114, 118) are inclined facets whose length I is less than the length L of the corresponding inclined facets (20; 120) of the first row (16; 116), the length I being preferably less than 30% of the length L, more preferably 50%, more preferably even 70%.

8. The light guide (2; 102) according to claim 7, **characterized in that** the inclined facets (24; 124) of the second row or rows (14, 18; 114, 118) are aligned with the corresponding inclined facets (20; 120) of the first row (16, 116).

9. A light guide (2; 102) according to one of claims 7 and 8, **characterized in that** the second row or rows (14, 18; 114, 118) comprises a first and a second connecting facet (28, 26; 128, 126) between the inclined facets (24; 124), respectively; the first facets (28; 128) being generally parallel to the main direction of the body and the second facets (26; 126) forming with perpendiculars to the main direction of the body and passing through said facets, respectively, an angle of less than 30°, more preferably less than 20°, more preferably even less than 10°.

10. A light guide (2; 102) according to claims 3 and 9, **characterized in that** the second connecting facets (26; 126) of the second row or rows (14, 18; 114, 118) are aligned with the connecting facets (22; 122) of the first row (16; 116), respectively.

11. Light guide (2; 102) according to claims 3 and 9 or claim 10, **characterized in that** the second connecting facets (26; 126) of the second row or rows (14, 18; 114, 118) have a height h lower than the height H of the corresponding connecting facets (22; 122) of the first row (16; 116), the height h being preferably lower than 30% of the height H, more preferably 50%, more preferably even 70%.

12. A light guide (2; 102) according to one of claims 1 to 11, **characterized in that** the width of the first row (16, 116) and/or the second row or rows (14, 18; 114, 118) varies along the main direction of the body (4; 104).

13. A light guide (2; 102) according to one of claims 1 to 12, **characterized in that** the width of the first row (16; 116) decreases and the width of the or at least one of the second rows (14, 18, 114, 114, 118) increases along the main direction of the body (4; 104) in a given direction.

14. A light guide (102) according to one of claims 1 to 13, **characterized in that** the width of the first row (116) decreases and the width of the or at least one of the second rows (114, 118) increases along a first portion of the body (104) in a given direction, and inversely along a second portion always in the same direction, said second portion being preferably adjacent to the first.

15. Lighting and/or signalling module, comprising a light guide and at least one light source, **characterized in that** the light guide (2, 102) is in accordance with one of claims 1 to 14.

16. A module according to claim 15, **characterized in that** it comprises at least one light source (8; 108) at each end of the light guide.

17. Lighting and/or signalling device comprising a housing and a lighting and/or signalling module, **characterised in that** the module complies with one of claims 15 and 16.
